# EUROPEAN PATENT APPLICATION

(11) **EP 4 459 807 A1**
(43) Date of publication of application: **06.11.2024**
(21) Application number: 23191609.9
(22) Date of filing: 16.08.2023
(51) Int. Cl.: H01R 13/453, H01R 13/52, B60L 53/16

(54) **CHARGING SOCKET**

(30) Priority: 03.05.2023 TW 112116400
(71) Applicant: K.S. Terminals Inc., 507 Xianxi Township (TW)
(72) Inventor: WU, JIAN-FONG, 507 XIANXI TOWNSHIP (TW)
(74) Representative: Straus, Alexander

(57) **Abstract**

A charging socket, comprising sequentially an outer shell, a sliding cover, and a base, the sliding cover being provided on the front surface of the base and sliding up and down relative to the base, wherein the front surface of the base has two elastic elements spaced above the plug connecting part and two baffles covering at least a part of the plug connecting part. The sliding cover has an inserting hole corresponding to the plug connecting part, an actuating part is provided on the rear surface of the sliding cover located above the inserting hole and connected to the two elastic elements to push the two baffles to swing in opposite directions simultaneously.

## Description

### FIELD OF THE INVENTION

The present disclosure relates to a charging socket for a vehicle, in particular a charging socket with a safety mechanism.

### BACKGROUND OF THE INVENTION

As electric vehicles become more popular, many public places are increasingly equipped with electric vehicle charging stations.

Although most of the common charging devices are equipped with a dust cover to cover the charging socket, it is inevitable that the installation in public areas is prone to damage by people, resulting in the plug jack of the charging socket being directly exposed, so that external contaminants (such as moisture, dust) will enter the plug jack, these contaminants will affect the normal use of the charging socket. In addition, if there is a lack of dust cover protection, it is also difficult to prevent small children from reaching into the jack, which may cause the risk of electric shock.

### SUMMARY OF THE INVENTION

In view of the aforementioned deficiencies, the present disclosure aims at providing a charging socket for vehicles, in particular a charging socket with a safety mechanism.

In accordance with the purpose of the present disclosure, the charging socket is provided with an outer shell, a sliding cover, and a base, the sliding cover being provided on the front surface of the base and sliding up and down relative to the base, the base having a plug connecting part, the front surface of the base having two elastic elements spaced above the plug connecting part and two baffles covering at least a part of the plug connecting part. The sliding cover has an inserting hole corresponding to the plug connecting part, an actuating part is provided on the rear surface of the sliding cover located above the inserting hole and connected to the two elastic elements to push the two baffles to swing in opposite directions.

Wherein, the rear surface of the sliding cover has an annular wall projecting along the contour of the sliding cover, the actuating part comprises two connecting rods extending downward from the upper wall of the annular wall, two actuating rods connected to the two connecting rods, and extending in the left and right directions, respectively, and two positioning posts located at the connection of the two connecting rods and the two actuating rods, respectively, extending in the direction of the base and connected to two elastic elements, respectively.

Wherein, both the left and right side walls of the annular wall of the sliding cover have a protrusion extending in the direction of the inserting hole, and each of the protrusions has a beveled surface.

Wherein, the two baffles are symmetrical and pivoted above the plug connecting part, each baffle including an outer wall surface and an inner wall surface, and the outer wall surface of the two baffles has an angled bend, and the contour of the angled bend of each baffle matches the contour of the beveled surface of each protrusion.

Wherein, the base also has a pressing block disposed between the two elastic elements.

Wherein, the front surface of the base has an annular wall projecting along the contour of the base, two stop walls are provided on the left and right sides of the annular wall, respectively, and the two stop walls project toward the direction of the sliding cover.

Wherein, the two elastic elements are installed in two recesses.

Wherein, the charging socket is also equipped with a dust cover that is mounted on the outer shell in a liftable manner.

Wherein, the front surface of the base also has two limit blocks installed above the plug connecting part, and the sliding cover has two limit slots corresponding to the two limit blocks.

Wherein, the contour of the sliding cover includes an upper contour and a lower contour, and the junction of the two contours forms an angle.

### BRIEF DESCRIPTION OF THE DRAWINGS

FIG. 1 is a schematic diagram of the charging socket of the present disclosure;
FIG. 2 is a schematic diagram of the rear surface of the sliding cover of the charging socket of the present disclosure;
FIG. 3 is a schematic diagram of the charging socket after the charging connector is plugged into the charging socket;
FIG. 4 is a partial cross-sectional view of FIG. 3;
FIG. 5 is a schematic diagram of the charging socket without the charging connector plugged in; and
Fig. 6 is a partial cross-sectional view of FIG. 5.

### DESCRIPTION OF THE PREFERRED EMBODIMENTS

In order to clearly illustrate the specific implementation of the present disclosure, the structure, and the effect achieved, the following embodiments are provided and illustrated by drawings:

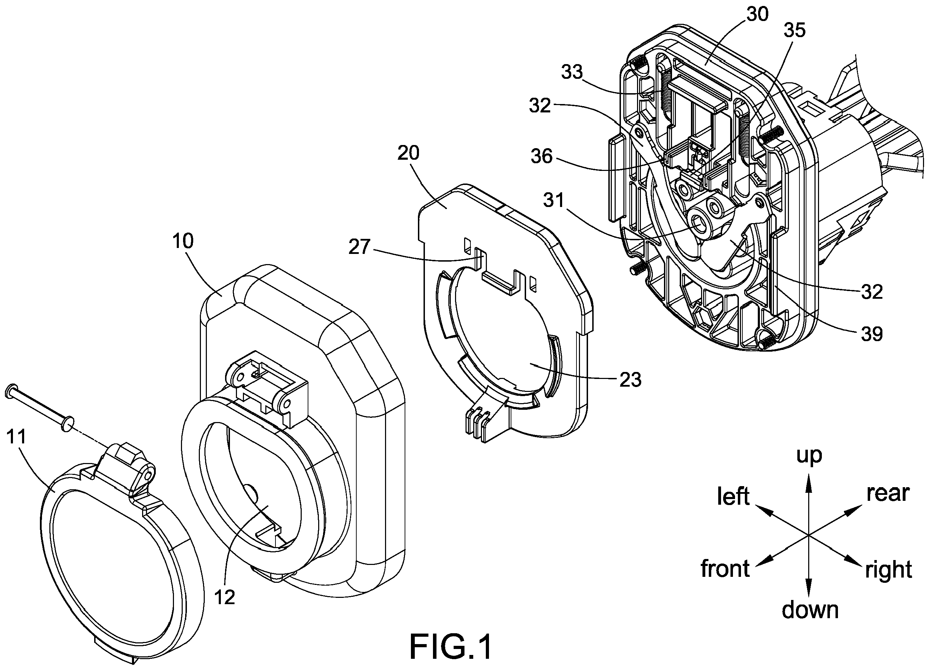

The present disclosure is based on the direction of movement of the sliding cover 20 as the up and down direction, the left and right sides of the sliding cover 20 as the left and right direction, and the front and rear sides of the sliding cover 20 as the front and rear direction. Wherein, the up and down directions, the left and right directions, and the front and rear directions are described as directions for illustration purposes. FIG. 1 illustrates a charging socket for a charging connector to be plugged in, comprising an outer shell 10, a sliding cover 20, and a base 30 installed sequentially from front to back. The sliding cover 20 is provided on the front surface of the base 30, and the sliding cover 20 can be moved up and down relative to the base 30. The outer shell 10 covers the sliding cover 20 and the base 30, and the outer shell 10 is provided with a liftable dust cover 11 for opening or closing an opening 12 on the outer shell 10.

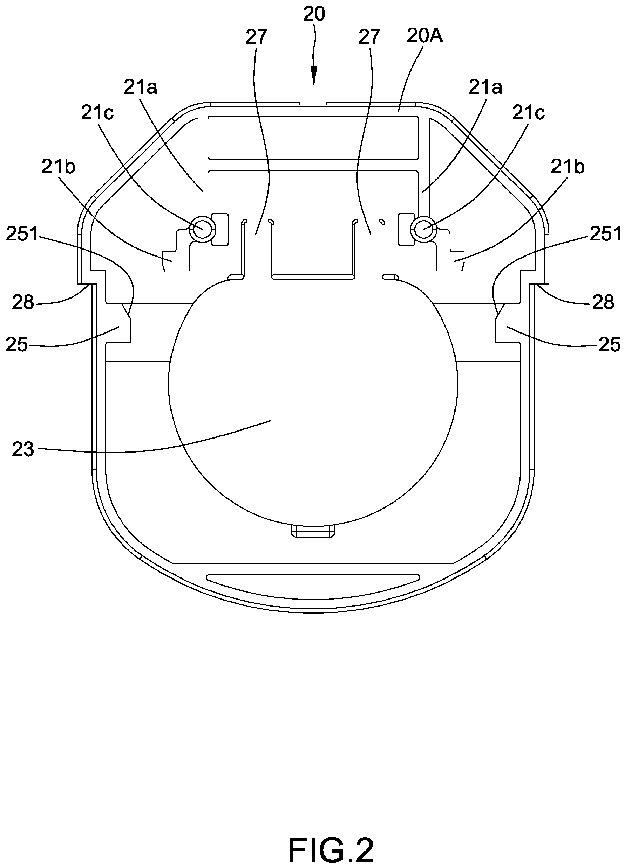

Referring to FIGS. 2 to 6, the plug connecting part has a plurality of plug jacks 31, and the front surface of the base 30 has two baffles 32 located at the left front and right front of the plug connecting part to cover at least a part of the plug jacks 31, and at least a part of the plug jacks 31 are electrified plug jacks 31. Each baffle 32 has an outer wall surface and an inner wall surface, wherein the outer wall surface of each baffle 32 has an angled bend 321.

The base 30 also has two recesses 34 spaced above the plug connecting part, two elastic elements 33 are provided in the two recesses 34, respectively, and the sliding cover 20 is connected to the two elastic elements 33 so that it can be moved up and down. Further, the sliding cover 20 has an inserting hole 23 corresponding to the plug connecting part, an actuating part is provided on the rear surface of the sliding cover 20 and is located above the inserting hole 23, the rear surface of the sliding cover 20 has a projecting annular wall 20A along the contour of the sliding cover 20, the actuating part comprises two connecting rods 21a extending downward from the upper wall of the annular wall 20A, and two actuating rods 21b are respectively connected to the two connecting rods 21a and extended toward the left and right side walls of the annular wall 20A, and two positioning posts 21c are respectively provided at the connection of the two connecting rods 21a and the two actuating rods 21b and extended toward the direction of the base 30 (i.e., extended backward), and the two positioning posts 21c are connected to the two elastic elements 33, respectively. When the sliding cover 20 is moved downward, the two actuating rods 21b push the two baffles 32 to swing synchronously in opposite directions. In the embodiment of the present disclosure, the contour of the two actuating rods 21b is in the shape of a ladder.

The front surface of the base 30 has a projecting annular wall 38 along the contour of the base 30, and the two stop walls 39 are located on the left and right sides of the annular wall 38 and are projecting in the direction of the sliding cover 20 (i.e., the front), and the contour of the sliding cover 20 includes an upper contour and a lower contour, and the junction of the two contours forms an angle 28. When the sliding cover 20 is moved downward, the stop wall 39 forms a stopping effect to retain the angle 28.

The left and right side walls of the annular wall 20A of the sliding cover 20 are each provided with a protrusion 25 (see FIG. 2), and the two protrusions 25 extend in the direction of the inserting hole 23 and both have a beveled surface 251, and the contour of the beveled surface 251 matches the contour of the angled bend 321 of the two baffles 32. When the two baffles 32 are swung to the left and right sides, the angled bend 321 of the outer wall surface of the two baffles 32 follows the contour of the protrusion 25 swinging to the left and right sides. In addition, the base 30 has two limit blocks 36 above the plug connecting part, and the sliding cover 20 has two limit slots 27 corresponding to the two limit blocks 36. When the sliding cover 20 moves downward, the bottom wall of the two limit slots 27 of the sliding cover 20 contacts the two limit blocks 36 so that the sliding cover 20 stops moving downward.

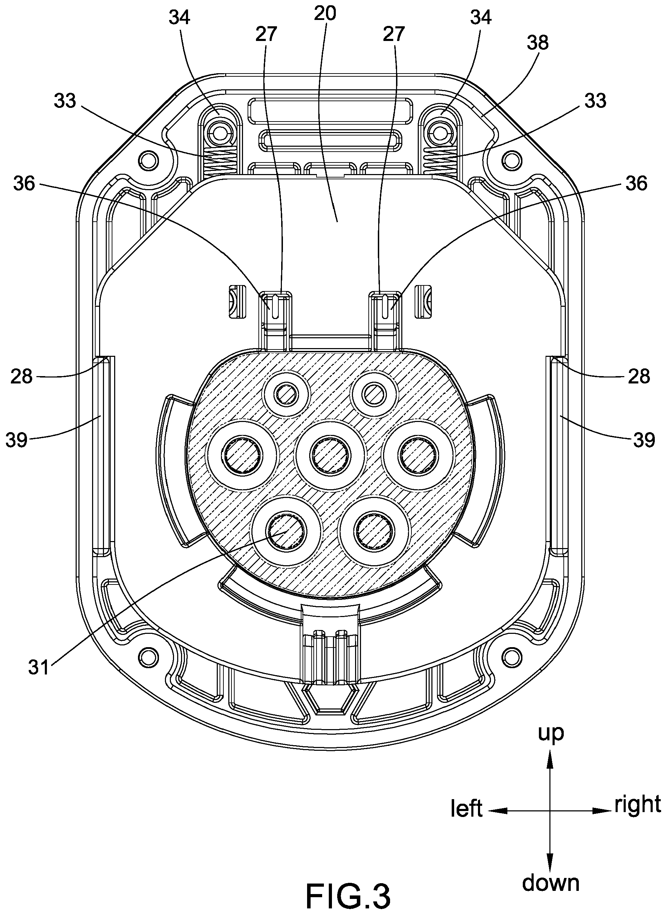

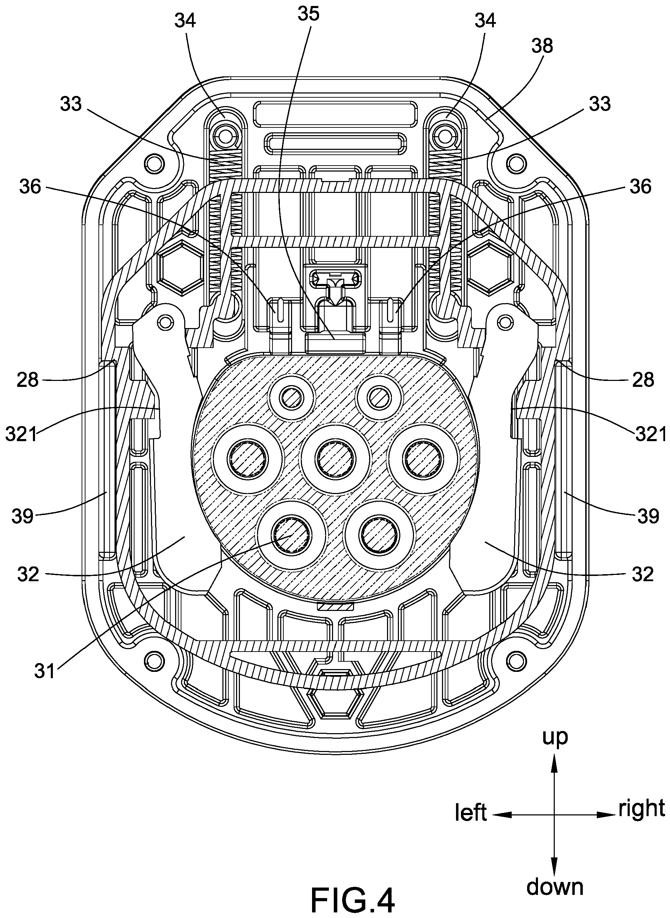

The base 30 also has a pressing block 35 disposed between the two elastic elements 33 so that when the charging connector is plugged in, the charging connector presses against the pressing block 35 to move it rearwardly so that the sliding cover 20 can be moved downwardly relative to the base 30 to form the states as shown in FIGS. 3 and 4.

Referring to FIG. 3 and FIG. 4, which are schematic diagrams of the states of the charging connector plugged into the charging socket, in these states, the pressing block 35 is moved backward by the pressure of the charging connector, causing the sliding cover 20 to move downward, and at the same time, the actuating rod 21b of the sliding cover 20 pushes the two baffles 32 to swing to the left and right sides, and the angled bend 321 of the outer wall of the two baffles 32 follows the protrusion 25 of the sliding cover 20 to swing to the left and right sides, and the bottom wall of the two limit slots 27 of the sliding cover 20 then contacts the two limit blocks 36, and the angle 28 of the sliding cover 20 is stopped at the stop wall 39, causing the sliding cover 20 to stop moving.

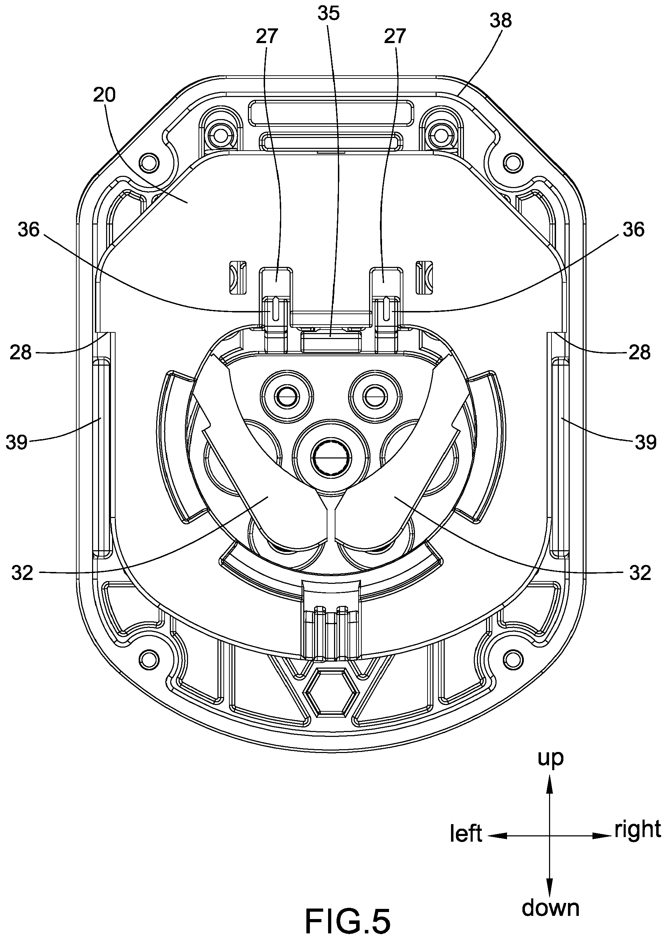

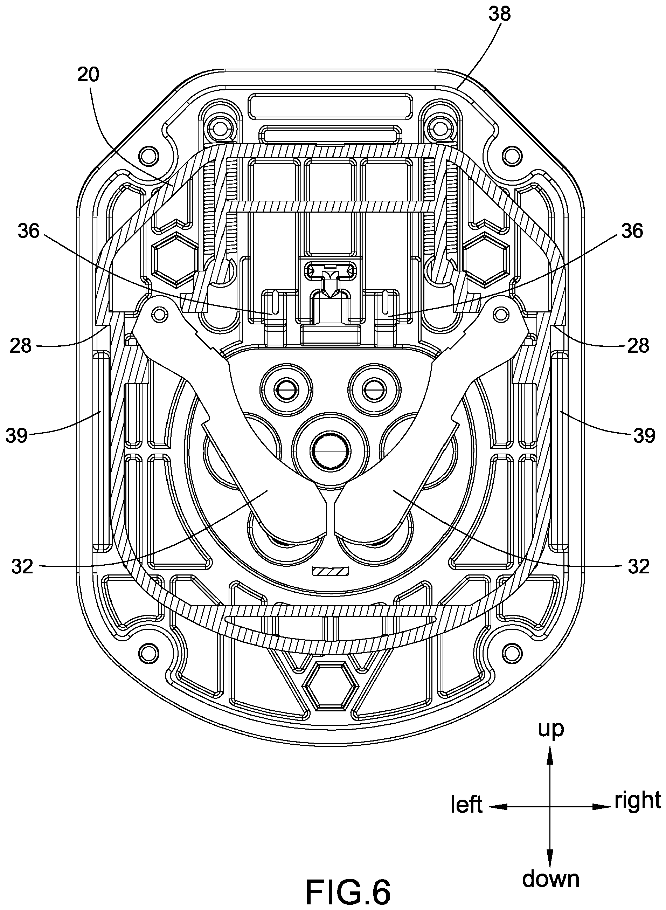

When the charging connector is pulled out, the sliding cover 20 moves upward due to the elasticity of the elastic element 33, and the pressing block 35 moves forward and returns to its position due to the absence of pressure from the charging connector, while the two baffles 32 are returned to the positions as shown in FIGS. 5 and 6.

## Claims

1. A charging socket, comprising an outer shell(10), a sliding cover(20), and a base(30) installed sequentially from front to back, the sliding cover(20) being provided on the front surface of the base(30) and moving up and down relative to the base,(30) the base having a plug connecting part, **characterized in that**:
the front surface of the base(30) having two elastic elements(33) spaced above the plug connecting part and two baffles(32) covering at least a part of the plug connecting part; and
the sliding cover(20) having an inserting hole(23) corresponding to the plug connecting part, an actuating part being provided on the rear surface of the sliding cover(20) located above the inserting hole(23) and connected to the two elastic elements(33) to push the two baffles(32) to swing in opposite directions.

2. The charging socket according to claim 1, wherein the rear surface of the sliding cover(20) has an annular wall(20A) projecting along the contour of the sliding cover(20), the actuating part comprises two connecting rods(21a) extending downward from the upper wall of the annular wall(20A), two actuating rods(21b) connected to the two connecting rods(21a), and extending in the left and right directions, respectively, and two positioning posts(21c) located at the connection of the two connecting rods(21a) and the two actuating rods(21b), respectively, extending in the direction of the base(30) and connected to two elastic elements(33), respectively.

3. The charging socket according to claim 2, wherein both the left and right side walls of the annular wall(20A) of the sliding cover(20) have a protrusion(25) extending in the direction of the inserting hole(23), and each of the protrusions(25) has a beveled surface(251).

4. The charging socket according to claim 3, wherein the two baffles(32) are symmetrical and pivoted above the plug connecting part, each baffle including an outer wall surface and an inner wall surface, and the outer wall surface of the two baffles(32) has an angled bend(321), and the contour of the angled bend(321) of each baffle(32) matches the contour of the beveled surface(251) of each protrusion(25).

5. The charging socket according to any one of claims 1 to 4, wherein the base also has a pressing block(35) disposed between the two elastic elements(33).

6. The charging socket according to any one of claims 1 to 5, wherein the front surface of the base(30) has an annular wall(38) projecting along the contour of the base(30), two stop walls(39) are provided on the left and right sides of the annular wall(38), respectively, and the two stop walls(39) project toward the direction of the sliding cover(20).

7. The charging socket according to any one of claims 1 to 6, wherein the two elastic elements(33) are installed in two recesses(34).

8. The charging socket according to claim 4, wherein the charging socket is also equipped with a dust cover(11) that is mounted on the outer shell(10) in a liftable manner.

9. The charging socket according to any one of claims 1 to 8, wherein the front surface of the base(30) also has two limit blocks(36) installed above the plug connecting part, and the sliding cover(20) has two limit slots(27) corresponding to the two limit blocks(36).

10. The charging socket according to any one of claims 1 to 9, wherein the contour of the sliding cover(20) includes an upper contour and a lower contour, and the junction of the two contours forms an angle(28).
